# FASCICULE DE BREVET EUROPEEN

(11) **EP 0 723 935 B1**
(45) Date de publication et mention de la délivrance du brevet: **22.10.1997**
(21) Numéro de dépôt: 96400162.2
(22) Date de dépôt: 23.01.1996
(51) Int. Cl.: C01G 49/10, C21B 15/00

(54) **Procédé de préparation de chlorure ferrique en solution aqueuse**
Verfahren zur Herstellung einer wässrigen Lösung von Eisen III Chlorid
Process for the preparation of an aqueous solution of iron III chloride

(30) Priorité: 26.01.1995 FR 9500880
(43) Date de publication de la demande: 31.07.1996
(73) Titulaire: ELF ATOCHEM S.A., 92800 Puteaux (FR)
(72) Inventeur: Peyre, Marie-Hélène, F-69007 Lyon (FR); Delannoy, Francis, F-69006 Lyon (FR); Murphy, John David, F-69001 Lyon (FR)

(56) Documents cités:
- EP-A- 0 518 410
- CHEMICAL ABSTRACTS, vol. 118, no. 6, 8 Février 1993 Columbus, Ohio, US; abstract no. 41822t, LOPES: page 166; XP002002280
- CHEMICAL ABSTRACTS, vol. 106, no. 2, 12 Janvier 1987 Columbus, Ohio, US; abstract no. 7099e, PEKLER: page 119; XP002002281

## Description

La présente invention concerne un procédé de préparation de chlorure ferrique et plus particulièrement du chlorure ferrique en solution aqueuse concentrée utilisable, notamment, comme agent floculant dans le traitement des eaux.

Les procédés classiques de fabrication du chlorure ferrique en solution à partir de minerais d'oxyde de fer comprennent généralement une attaque par une solution aqueuse d'acide chlorhydrique conduisant à la formation de chlorure ferrique selon l'équation ;

Fe₂O₃ + 6HCl = 2FeCl₃ + 3H₂O (I)

Le brevet GB - A-734081 de la Société The United Steel Companies Ltd concerne un procédé de fabrication de solution aqueuse de chlorure ferrique qui consiste à dissoudre un minerai de fer dans une solution aqueuse d'acide chlorhydrique puis à traiter la suspension aqueuse obtenue sur un filtre pour en séparer les matières insolubles qu'elle contient. Ces matières insolubles de la suspension constituent la gangue du minerai et leur volume est important ce qui nécessite des filtres de grande capacité.

Le brevet GB- A-409847 concerne un procédé de préparation de solutions aqueuses de chlorure ferrique et/ou d'acide titanique par traitement d'un minerai de fer titanifère tel que l'ilménite par des solutions aqueuses d'acide chlorhydrique.

L'utilisation d'un minerai riche en oxyde de titane entraîne la nécessité de précipiter l'acide titanique à température élevée ce qui génère inévitablement des particules de faible granulométrie et, par conséquent, de filtrabilité difficile nécessitant des systèmes de filtration adaptés et coûteux afin d'obtenir des solutions de chlorure ferrique exemptes de titane.

On a maintenant trouvé un procédé de préparation de chlorure ferrique en solution aqueuse qui consiste à effectuer des mises en contact successives de minerai de fer avec des solutions aqueuses d'acide chlorhydrique, caractérisé en ce que :
a) dans une première étape on met en contact une solution aqueuse d'acide chlorhydrique avec une quantité de minerai de fer tel que le rapport molaire Fe₂O₃/HCl soit supérieur à 1/6 et, de préférence compris entre 1,5/6 et 3/6.
   jusqu'à disparition de la quasi totalité de l'acide chlorhydrique,
b) on décante et on récupère la solution aqueuse surnageante de chlorure ferrique, puis
c) dans une seconde étape, on met en contact, en présence du produit décanté en b), une nouvelle solution aqueuse d'acide chlorhydrique avec une nouvelle quantité de minerai de fer tel que le rapport molaire Fe₂O₃/HCl nouvellement introduits soit égal à 1/6, jusqu'à disparition de la quasi totalité de l'acide chlorhydrique ; on décante et on récupère la solution aqueuse surnageante de chlorure ferrique, puis
d) on effectue n fois les opérations de l'étape c), puis
e) dans une ultime étape, on met en contact le produit décanté dans la pénultième étape avec une solution aqueuse d'acide chlorhydrique tel que le rapport molaire HCl/Fe₂O₃ utilisé dans l'étape a) soit supérieur à 6/1, et, de préférence supérieure à 6,6/1, et, au plus égal à 8/1, puis
f) on filtre la suspension finale.

Le procédé selon la présente invention s'applique aux minerais de fer ayant une teneur pondérale en oxydes de fer, calculée sur produit sec, au moins égale à 90 % et, de préférence, supérieure à 95 %.

A titre d'illustration de minerai de fer utilisable selon la présente invention, on citera l'hématite ou la magnétite.

Le procédé selon l'invention s'applique tout particulièrement à l'hématite.

De préférence, on utilisera une hématite ayant une teneur en Fe₂O₃, calculée sur produit sec, au moins égale à 90 % et, de préférence, supérieure à 95 %.

Les minerais de fer utilisables selon la présente invention se présentent généralement sous forme de grains ayant un diamètre au moins égal à 100 microns et peuvent atteindre quelques millimètres. Leur surface spécifique peut varier dans une large mesure. De préférence, on utilise des minerais de fer ayant une surface spécifique comprise entre 1 et 2 m²/g environ.

Les minerais de fer utilisables selon la présente invention peuvent contenir diverses impuretés telles que silice, oxyde de titane. On préfère utiliser ceux qui possèdent de très faibles teneurs en ces impuretés.

La concentration pondérale en acide chlorhydrique des solutions aqueuses d'acide chlorhydrique utilisables selon la présente invention est au moins égale à 20 % et, de préférence comprise entre 33 % et 40 %.

Selon la présente invention l'étape a) du procédé est réalisée d'une façon telle que l'on introduit le minerai de fer dans une solution aqueuse d'acide chlorhydrique agitée et qui a été préalablement chauffée à une température au moins égale à 40° C et, de préférence, à une température comprise entre 50°C et 60° C.

L'exothermicité de la réaction de l'acide chlorhydrique sur Fe₂O₃ selon l'équation (I) est telle que la température du milieu préalablement chauffé peut atteindre 90° C voir 115° C.

Cette élévation de température est fonction de la concentration en acide-chlorhydrique de la solution aqueuse acide de chlorure ferrique. Selon la présente invention cette exothermicité est généralement suffisante pour maintenir le milieu réactionnel à une température au moins égale à 80°C et, de préférence, comprise entre 90°C et 100°C, et ceci, jusqu'à la quasi consommation de l'acide chlorhydrique.

On ne sortirait pas du cadre de l'invention si l'on effectuait un apport de calories notamment par un chauffage externe du milieu réactionnel ou bien encore par introduction directe dans le milieu de vapeur d'eau sous pression.

L'agitation du milieu réactionnel peut être réalisée par tout moyen assurant une bonne dispersion du minerai de fer dans la solution aqueuse d'acide chlorhydrique. Ainsi elle peut être réalisée par une turbine type "impeller".

Elle peut être également réalisée par recirculation de la suspension au moyen d'une pompe externe.

Lorsque la quasi totalité de l'acide chlorhydrique a été consommé, on arrête l'agitation afin de permettre au minerai non réagi de décanter.

Le temps de décantation peut varier dans une large mesure. Il est fonction des quantités et des caractéristiques physiques du minerai non réagi et également des éventuels insolubles présents dans le minerai de fer de départ.

Ce temps de décantation doit être suffisant pour permettre de décanter la quasi totalité des insolubles les plus fins (silice colloïdale). Par exemple, un temps s'échelonnant de 15 minutes à plusieurs dizaines de minutes est satisfaisant.

La solution aqueuse surnageante de FeCl₃ est récupérée et peut subir une filtration. Celle-ci peut être facilitée par l'utilisation d'agents de filtration. Ces agents de filtration peuvent être disposés sous forme d'une précouche. Ils peuvent également être utilisés en technique dite d'alluvionnage/nourrissage. Cette technique consiste à amener en même temps sur le filtre la solution à filtrer et l'agent de filtration. A titre d'illustration d'agents de filtration utilisables selon la présente invention on citera le Kieselguhr (Clarcel), la terre d'infusoire, la perlite.

Selon le procédé de la présente invention, la seconde mise en contact est effectuée en présence du produit décanté en b).

On introduit une nouvelle charge de minerai de fer dans la suspension aqueuse d'acide chlorhydrique agitée et préalablement chauffée à une température au moins égale à 40° C. Les quantités de minerai de fer frais et d'acide chlorhydrique introduites sont telles que le rapport molaire Fe₂O₃/HCl est quasiment égal à 1/6.

La réaction est maintenue jusqu'à disparition quasi totale de l'acide chlorhydrique, puis on décante comme dans l'étape b), on récupère la solution surnageante de FeCl₃ qui peut comme précédemment être filtrée.

On effectue n fois l'opération précédemment décrite.

Selon la présente invention, le nombre d'opérations n peut varier dans une large mesure. Il est fonction de la quantité d'insolubles présents dans le minerai de départ et de leur accumulation au cours des étapes successives.

n est au moins égal à 2, et, de préférence au moins égale à 10. Il peut atteindre environ 50.

Selon la présente invention la dernière étape peut être réalisée avec une solution aqueuse d'acide chlorhydrique tel que le rapport molaire HCl/Fe₂O₃ mis en oeuvre à l'étape a) soit supérieur à 6/1 et, de préférence supérieur à 6,6/1.

La suspension résultante de cette dernière étape est filtrée au moins une fois afin d'éliminer tous les insolubles en suspension.

L'excès d'acide chlorhydrique du filtrât acide ainsi récupéré peut être épuisé dans une opération annexe sur du minerai de fer.

On ne sortirait pas du cadre de l'invention si on injectait dans le milieu réactionnel un courant d'oxygène ou tout gaz inerte enrichi en oxygène ou en chlore en vue de transformer le chlorure ferreux en FeCl₃. Ceci peut être notamment le cas ou le minerai de fer contient des oxydes tels Fe₃O₄ et/ou FeO.

Cette transformation peut être éventuellement réalisée en aval de la réaction dans un appareillage assurant un bon contact gaz/liquide.

La concentration pondérale des solutions aqueuses de FeCl₃ obtenues selon la présente invention peut varier dans une large mesure. Elle est fonction de la concentration des solutions aqueuses de HCl et de l'humidité du minerai.

Avantageusement on utilisera des solutions aqueuses de HCl comprises entre 33 % et 40 % en poids ce qui conduit à des solutions de FeCl₃ comprise entre 38,5 % et 45 %.

Le procédé selon la présente invention peut être mis en oeuvre dans une installation très simple comprenant un réacteur en acier ébonité ou en acier vitrifié, d'un agitateur, de moyens de chauffage, de prise de température, d'introductions de gaz et/ou de liquide, d'au moins d'un dispositif de soutirage et d'un système de filtration.

Il est possible d'avoir un système d'évaporation pour une concentration éventuelle de la solution de chlorure ferrique.

On opère de préférence à pression atmosphérique.

On ne sortirait pas du cadre de l'invention si on opérait à une pression différente de la pression atmosphérique.

Le procédé de l'invention permet d'obtenir des solutions de chlorure ferrique pures ne contenant quasiment pas d'acide chlorhydrique libre et aisément filtrables.

L'appareillage est simple et optimisé en taille compte tenu du temps de réaction et de filtration qui sont, selon les conditions de l'invention, très courts.

Les exemples qui suivent illustrent l'invention.

### Exemple 1 (selon l'invention)

Un réacteur de 1 litre est chargé avec 928g d'une solution aqueuse d'acide chlorhydrique ayant une concentration pondérale en HCl de 33 % ce qui correspond à un volume d'environ 800 cm³. Le réacteur est muni d'un agitateur à 4 pales inclinées (diamètre 6 cm, vitesse d'agitation 600 tours/min), d'une contrepale, d'une double enveloppe et d'une isolation thermique. On chauffe le réacteur par circulation d'un fluide caloporteur dans la double enveloppe jusqu'à ce qu'on atteigne une température de 60° C. Ensuite, on ajoute 492g d'hématite humide (5 % d'eau) ce qui correspond à un volume d'environ 90 cm³, ayant une teneur pondérale en Fe₂O₃ de 96 % par rapport au produit sec. Ceci correspond à un rapport molaire Fe₂O₃/HCl égal à environ 2/6. La réaction se déroule et la température du milieu augmente d'elle-même à 95° C.

Cette opération est réalisée en batch pendant 4 heures. Des échantillons de la solution sont pris au cours de la réaction, ils sont filtrés afin d'éliminer les fines particules en suspension, puis analysés pour déterminer les taux de conversion d'HCl et de formation de FeCl₃. Les résultats suivants sont obtenus :

| **Temps (minutes)** | **Taux de conversion de HCl (%)** |
|---|---|
| 30 | 76 |
| 60 | 91 |
| 120 | 97,5 |
| 240 | 99 |

La réaction est donc quasiment complète (98 %) après 2 heures. On obtient une solution aqueuse de chlorure ferrique ayant une concentration pondérale en FeCl₃ égale à 38,5 %.

Après décantation du minerai non réagi et récupération de la solution de FeCl₃ on effectue un chargement avec des quantités de solution aqueuse d'acide chlorhyddque et de minerai tel que le rapport molaire Fe₂O₃/HCl est égal à 1/6. La réaction se déroule dans les mêmes conditions que précédemment. Les résultats suivants sont obtenus :

| **Temps (minutes)** | **Taux de conversion de HCl (%)** |
|---|---|
| 30 | 75 |
| 60 | 90 |
| 120 | 98 |
| 240 | 99 |

La réaction se déroule à une vitesse similaire à celle de la première étape. Elle est quasiment complète (98 %) après 2 heures. On obtient une solution aqueuse en FeCl₃ ayant une concentration pondérale en FeCl₃ égale à 38,5 %.

On effectue ainsi 9 opérations d'attaque et de décantation. Les résultats suivants sont obtenus pour la 9ème attaque :

| **Temps (minutes)** | **Taux de conversion de HCl (%)** |
|---|---|
| 60 | 91 |
| 120 | 98,5 |
| 240 | 99,5 |

La vitesse d'attaque ne diminue pas après plusieurs opérations.

Après la 9ème décantation, on récupère la solution surnageante de FeCl₃ et on effectue une dernière attaque sans rajouter du minerai frais et en présence d'un excès d'HCl de 10 %. L'attaque est terminée après environs 4 heures lorsque la teneur en fer de la solution est constante. La suspension finale est filtrée pour éliminer le résidu insoluble.

On récupère 62g de résidu sec, dont 11g de Fe₂O₃ ce qui ne correspond qu'à une perte de rendement de 0,5 %.

### Exemple 2 (non conforme à l'invention)

Le réacteur de 1 litre est chargé avec 928g d'une solution aqueuse d'acide chlorhydrique ayant à une concentration pondérale en HCl de 33 %. On ajoute 246g d'hématite humide (5 % d'eau) ayant une teneur pondérale en Fe₂O₃ de 96 % par rapport au produit sec. Ceci correspond à un rapport molaire Fe₂O₃/HCl quasiment égal à 1/6. Ensuite, on chauffe le réacteur par circulation d'un fluide caloporteur dans la double enveloppe jusqu'à ce qu'on atteigne une température de 60° C, la température du milieu augmente d'elle-même vers 95° C.

Cette opération est réalisée en batch pendant 4 heures. Des échantillons de la solution sont pris au cours de la réaction, ils sont filtrés afin d'éliminer les fines particules en suspension, puis analysés pour déterminer les taux de conversion d'HCl et formation de FeCl₃ . Les résultats suivants sont obtenus :

| **Temps (minutes)** | **Taux de conversion de HCl (%)** |
|---|---|
| 30 | 64 |
| 60 | 72,5 |
| 120 | 84,5 |
| 240 | 94,5 |
| 360 | 97 |

La réaction est beaucoup plus lente que dans les attaques de l'exemple 1 ci-dessus, lorsque les taux de conversion élevés ont été atteints.

La suspension finale est filtrée afin d'éliminer le résidu d'insolubles de la solution de chlorure ferrique. On récupère 12g de résidu sec, dont 6,8g de Fe₂O₃ ce qui correspond à une perte de rendement de 3 %.

## Revendications

1. Procédé de préparation de chlorure ferrique en solution aqueuse qui consiste à effectuer des mises en contact successives de minerai de fer avec des solutions aqueuses d'acide chlorhydrique, caractérisé en ce que :
a) dans une première étape on met en contact une solution aqueuse d'acide chlorhydrique avec une quantité de minerai de fer tel que le rapport molaire Fe₂O₃/HCl soit supérieur à 1/6, jusqu'à disparition de la quasi totalité de l'acide chlorhydrique,
b) on décante et on récupère la solution aqueuse surnageante de chlorure ferrique, puis
c) dans une seconde étape, on met en contact, en présence du produit décanté en b), une nouvelle solution aqueuse d'acide chlorhydrique avec une nouvelle quantité de minerai de fer tel que le rapport molaire Fe₂O₃/HCl soit égal à 1/6, jusqu'à disparition de la quasi totalité acide chlorhydrique ; on décante et on récupère la solution aqueuse surnageante de chlorure ferrique, puis
d) on effectue n fois les opérations de l'étape c), puis
e) dans une ultime étape, on met en contact le produit décanté dans la pénultième étape avec une solution aqueuse d'acide chlorhydrique telque le rapport molaire HCl/Fe₂O₃ utilisé dans l'étape a) soit supérieur à 6/1, puis
f) on filtre la suspension finale.

2. Procédé selon la revendication 1, caractérisé en ce que le rapport molaire Fe₂O₃/HCl dans a) est compris entre 1,5/6 et 3/6.

3. Procédé selon la revendication 1, caractérisé en ce que le rapport molaire dans e) est supérieur à 6,6/1.

4. Procédé selon l'une des revendications 1 à 3, caractérisé en ce que n est au moin égal à 2 et, de préférence au moins égal à 10.

5. Procédé selon l'une des revendications 1 à 4, caractérisé en ce que dans a) on introduit le minerai de fer dans une solution aqueuse d'acide chlorhydrique agité et préalablement chauffée à une température au moins égale à 40°C.

6. Procédé selon la revendication 5, caractérisé en ce que la solution aqueuse d'acide chlorhydrique est préalablement chauffée à une température comprise entre 50°C et 60°C.

7. Procédé selon la revendication 1, caractérisé en ce que la nouvelle solution aqueuse d'acide chlorhydrique de c) est préalablement chauffée à une température au moins égale à 40°C.

8. Procédé selon la revendication 1, caractérisé en ce que le minerai de fer est la magnétite ou, de préférence, l'hématite.

9. Procédé selon la revendication 8, caractérisé en ce que l'hématite à une teneur pondérale en Fe₂O₃, calculée sur produit sec, au moins égale à 90 %.

10. Procédé selon l'une des revendications 1 à 7, caractérisé en ce que la concentration pondérale en acide chlorhydrique de la solution aqueuse d'acide chlorhydrique est au moins égale à 20 %.

11. Procédé selon la revendication 10, caractérisé en ce que la concentration pondérale en acide chlorhydrique de la solution aqueuse d'acide chlorhydrique est comprise entre 33 % et 40 %.

## Claims

1. Process for the preparation of ferric chloride in aqueous solution, which consists in bringing iron ore successively into contact with aqueous solutions of hydrochloric acid, characterized in that
a) in a first step, an aqueous solution of hydrochloric acid is brought into contact with a quantity of iron ore such that the molar ratio Fe₂O₃/HCl is greater than 1/6, until substantially all of the hydrochloric acid disappears,
b) the mixture is allowed to settle and the supernatant aqueous solution of ferric chloride is recovered, then
c) in a second step, a new aqueous solution of hydrochloric acid is brought into contact, in the presence of the product which settled in b), with a new quantity of iron ore such that the molar ratio Fe₂O₃/HCl is equal to 1/6, until substantially all of the hydrochloric acid disappears; the mixture is allowed to settle and the supernatant aqueous solution of ferric chloride is recovered, then
d) the operations in step c) are carried out n times, then
e) in a final step, the product which settled in the penultimate step is brought into contact with an aqueous solution of hydrochloric acid such that the molar ratio HCl/Fe₂O₃ used in step a) is greater than 6/1, then
f) the final suspension is filtered.

2. Process according to Claim 1, characterized in that the molar ratio Fe₂O₃/HCl in a) is between 1.5/6 and 3/6.

3. Process according to Claim 1, characterized in that the molar ratio in e) is greater than 6.6/1.

4. Process according to one of Claims 1 to 3, characterized in that n is at least equal to 2 and preferably at least equal to 10.

5. Process according to one of Claims 1 to 4, characterized in that, in a), the iron ore is introduced into an agitated aqueous solution of hydrochloric acid previously heated to a temperature of at least equal to 40°C.

6. Process according to Claim 5, characterized in that the aqueous solution of hydrochloric acid is previously heated to a temperature of between 50°C and 60°C.

7. Process according to Claim 1, characterized in that the new aqueous solution of hydrochloric acid in c) is previously heated to a temperature at least equal to 40°C.

8. Process according to Claim 1, characterized in that the iron ore is magnetite or, preferably, hematite.

9. Process according to Claim 8, characterized in that the hematite has an Fe₂O₃ content by weight, calculated on the basis of dry product, at least equal to 90 %.

10. Process according to one of Claims 1 to 7, characterized in that the concentration by weight of hydrochloric acid in the aqueous solution of hydrochloric acid is at least equal to 20 %.

11. Process according to Claim 10, characterized in that the concentration by weight of hydrochloric acid in the aqueous solution of hydrochloric acid is between 33 % and 40 %.

## Patentansprüche

1. Verfahren zur Herstellung von Eisen(III)-chlorid in wäßriger Lösung, bei dem man nacheinander Eisenerz mit wäßrigen Salzsäurelösungen in Kontakt bringt, dadurch gekennzeichnet, daß:
a) man in einem ersten Verfahrensschritt eine wäßrige Salzsäurelösung mit einer Menge an Eisenerz in Kontakt bringt, so daß das Fe₂O₃/HCl-Molverhältnis größer als 1/6 ist, bis quasi der gesamte Chlorwasserstoff verschwunden ist;
b) man die oben aufschwimmende wäßrige Eisen(III)-chloridlösung dekantiert und abtrennt;
c) man anschließend in einem zweiten Verfahrensschritt in Gegenwart des in Schritt b) dekantierten Produktes eine neue wäßrige Salzsäurelösung mit einer neuen Menge an Eisenerz in Kontakt bringt, so daß das Fe₂O₃/HCl-Molverhältnis größer als 1/6 ist, bis quasi der gesamte Chlorwasserstoff verschwunden ist; man die oben aufschwimmende wäßrige Eisen(III)-chloridlösung dekantiert und abtrennt;
d) man anschließend n-mal das Verfahren gemäß Verfahrensschritt c) durchführt;
e) man anschließend in einem letzten Verfahrensschritt das im vorletzten Verfahrensschritt dekantierte Produkt mit einer wäßrigen Salzsäurelösung in Kontakt bringt, so daß das in Verfahrensschritt a) verwendete HCl/Fe₂O₃-Molverhältnis größer als 6/1 ist;
f) man anschließend die Endsuspension filtriert.

2. Verfahren nach Anspruch 1, dadurch gekennzeichnet, daß das Fe₂O₃/HCl-Molverhältnis in Schritt a) zwischen 1,5/6 und 3/6 liegt.

3. Verfahren nach Anspruch 1, dadurch gekennzeichnet, daß das Molverhältnis in Schritt e) größer als 6,6/1 ist.

4. Verfahren nach einem der Ansprüche 1 bis 3, dadurch gekennzeichnet, daß n mindestens gleich 2, vorzugsweise mindestens gleich 10, ist.

5. Verfahren nach einem der Ansprüche 1 bis 4, dadurch gekennzeichnet, daß man in Schritt a) das Eisenerz in eine wäßrige Salzsäurelösung einbringt, die gerührt wird und zuvor auf eine Temperatur von mindestens 40 °C erhitzt worden ist.

6. Verfahren nach Anspruch 5, dadurch gekennzeichnet, daß die wäßrige Salzsäurelösung zuvor auf eine Temperatur zwischen 50 °C und 60 °C erhitzt worden ist.

7. Verfahren nach Anspruch 1, dadurch gekennzeichnet, daß die neue wäßrige Salzsäurelösung von Verfahrensschritt c) zuvor auf eine Temperatur von mindestens 40 °C erhitzt wird.

8. Verfahren nach Anspruch 1, dadurch gekennzeichnet, daß das Eisenerz Magnetit oder vorzugsweise Hämatit ist.

9. Verfahren nach Anspruch 8, dadurch gekennzeichnet, daß der Hämatit einen Gewichtsgehalt an Fe₂O₃, berechnet auf das Trockenprodukt, von mindestens 90 % aufweist.

10. Verfahren nach einem der Ansprüche 1 bis 7, dadurch gekennzeichnet, daß die Gewichtskonzentration der wäßrigen Salzsäurelösung an Chlorwasserstoff mindestens 20 % beträgt.

11. Verfahren nach Anspruch 10, dadurch gekennzeichnet, daß die Gewichtskonzentration der wäßrigen Salzsäurelösung an Chlorwasserstoff zwischen 33 % und 40 % liegt.
